# EUROPÄISCHE PATENTSCHRIFT

(11) **EP 0 577 057 B1**
(45) Veröffentlichungstag und Bekanntmachung des Hinweises auf die Patenterteilung: **08.04.1998**
(21) Anmeldenummer: 93110321.2
(22) Anmeldetag: 29.06.1993
(51) Int. Cl.: H04M 19/00

(54) **Leitungsabschluss einer Telefonleitung**
Line termination of a telephone line
Terminaison de ligne d'une ligne de téléphone

(30) Priorität: 01.07.1992 DE 4221567
(43) Veröffentlichungstag der Anmeldung: 05.01.1994
(73) Patentinhaber: SIEMENS AKTIENGESELLSCHAFT, 80333 München (DE)
(72) Erfinder: Hauptmann, Jörg, Dipl.-Ing., A-9500 Villach (AT)

(56) Entgegenhaltungen:
- EP-A- 46 588
- EP-A- 439 641
- US-A- 5 020 102

## Beschreibung

Die Erfindung betrifft einen Leitungsabschluß einer Telefonleitung mit einer Regelungsanordnung zur Erzeugung einer geregelten Versorgungsspannung für eine Abschlußschaltung, die einen Verstärker enthält, der aus der Wechselspannung der Telefonleitung und einer Referenzspannung eine Ausgangs-Stellgröße erzeugt, die einen zwischen den Leiterklemmen der Telefonleitung angeordneten Stelltransistor steuert.

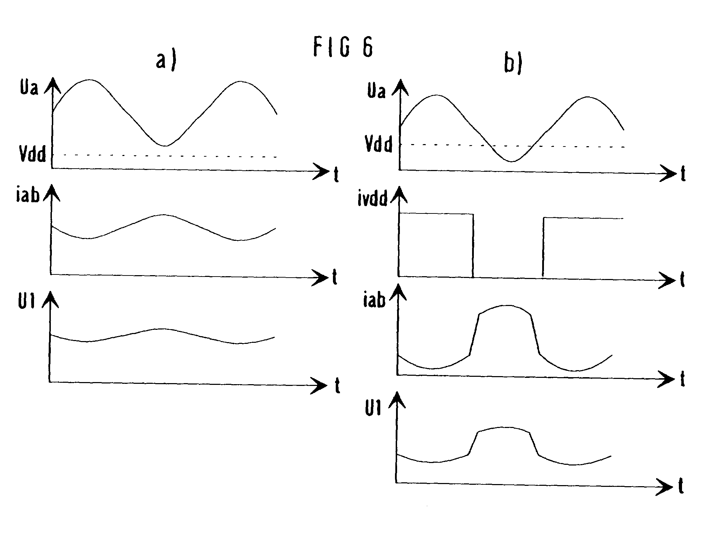

Ein derartiger Leitungsabschluß ist aus der Veröffentlichung F. Dielacher et al., "A Software Programmable CMOS Telephone Circuit", IEEE Journal of Solid-State-Circuits, Vol. 26, No. 7, July 1991 bekannt und in Figur 5 als Prinzipschaltbild dargestellt. Zwischen den Leiterklemmen a und b der Telefonleitung fließt der Strom iab. Dieser Strom wird an dem einseitig mit Bezugspotential GND verbundenen Widerstand Rs in eine Spannung Ub umgesetzt. Aus der Spannung Ub wird mit Hilfe einer Übertragungsfunktion IMP eine Referenzspannung Ur gebildet, die einem Differenzverstärker A1 zugeführt wird. Da mit Hilfe der Kapazität C2 der Gleichspannungsanteil an der Leiterklemme b abgekoppelt wird, ist die Referenzspannung Ur eine Wechselspannung, die dem Sollwert der Leitungsabschlußimpedanz entspricht. Die zweite Eingangsspannung Ui des Differenzverstärkers A1 ist proportional zur Wechselspannung an den Klemmen a und b der Telefonleitung. Dazu werden die Wechselanteile der Leiterspannungen Ua und Ub mit den Kapazitäten C1 und C2 abgekoppelt und im Summierer S1 addiert. Der Verstärker A1 erzeugt ausgangsseitig eine Ausgangs-Stellgröße U1, die einen zwischen den Leiterklemmen a und b der Telefonleitung angeordneten Stelltransistor T1 so steuert, daß die Spannung Ui der Referenzspannung Ur entspricht. Auf diese Weise wird die an den Klemmen a und b angeschlossene Telefonleitung mit der durch die Übertragungsfunktion IMP gegebenen gewünschten Impedanz abgeschlossen.

Bei einer Ausführung des Leitungsabschlusses mit einem integrierten Schaltkreis IC läßt sich mit Hilfe einer Regelungsanordnung aus der Telefonleitung eine geregelte Versorgungsspannung Vdd für die integrierte Schaltung IC erzeugen. Die Versorgungsspannung Vdd liegt an einer Elektrode des Speicherkondensators CV an. Die zwischen dem Transistor T2 und einer Leiterklemme liegende Diode D verhindert, daß bei einer Leiterspannung, die niedriger als Vdd ist, ein Strom vom Kondensator CV in die Telefonleitung abfließen kann.

In der praktischen Realisierung wird der Verstärker Al aus Stabilitätsgründen vorzugsweise als Integrator mit verhältnismäßig geringer Transitfrequenz ausgeführt. Die Schleifenverstärkung der gezeigten Impedanzregelung wird dann durch die frequenzabhängige Verstärkung des Verstärkers A1 und die schwankungsbehaftete Transkonduktanz des Transistors T1 bestimmt.

Figur 6a zeigt Signalverläufe der Leiterspannung Ua und der Versorgungsspannung Vdd in Verbindung mit dem Leiterstrom iab und der Ausgangs-Stellgröße U1 des Verstärkes A1. Der Gleichspannungs-Arbeitspunkt an der a-Leiterklemme ist in diesem Fall ausreichend hoch, so daß die Schaltung problemlos wie vorgesehen arbeiten kann. Figur 6b zeigt die Verhältnisse bei kleinen Gleichspannungs-Arbeitspunkten an der Klemme a. Bei niedrigen oder negativen Wechselspannungssignalen, also den Sprachsignalen, kann die Spannung Ua die Versorgungsspannung Vdd unterschreiten. Wie der Kurvenverlauf für den Strom ivdd zeigt, kann bei diesen Betriebszuständen die Diode D in den Sperrzustand gelangen und den Vdd-Versorgungsstrom sperren. Es entsteht ein sprungartiger Stromüberfluß im Leitungsstrom iab, der vom Transistor T1 übernommen werden muß. Dies bedeutet ein sprunghaftes Ansteigen der Ausgangs-Stellgröße U1. Da jedoch die Schleifenverstärkung aufgrund der Auslegung des Verstärkers A1 für derartig hochfrequente Transientenvorgänge zu gering ist, kommt es im Übergangsbereich der Kurvenabschnitte zu beträchtlichen Verzerrungen des Sprachsignals.

Der Erfindung liegt die Aufgabe zugrunde, eine Möglichkeit zur Verminderung oder Eliminierung der beschriebenen Verzerrungen anzugeben.

Diese Aufgabe wird mit einem Leitungsabschluß mit den Merkmalen von Patentanspruch 1 gelöst. Ausgestaltungen der Erfindung sind in den abhängigen Ansprüchen gekennzeichnet.

Die Erfindung hat den Vorteil, daß der Regelkreis als unterlagerter Regelkreis eine Schleifenstromregelung mit einer großen Schleifenverstärkung ermöglicht, so daß es zu einer schnellen Ausregelung sprunghafter Signaländerungen des Leitungsstroms und damit zur Verminderung von Verzerrungen kommt. Mit dem Regelkreis werden Gleichspannungs-Arbeitspunkte an den Leiterklemmen der Telefonleitung möglich, die in der Größenordnung der geregelten Versorgungsspannung Vdd liegen.

Die Erfindung wird nachfolgend anhand der Figuren der Zeichnung näher erläutert. Es zeigen:
- Figur 1: ein Ausführungsbeispiel eines erfindungsgemäßen Leitungsabschlusses,
- Figur 2: ein Detailschaltbild zur Realisierung eines einfachen integrierbaren Addierers,
- Figur 3: ein detailliertes Schaltbild zur Realisierung eines Regelkreises,
- Figur 4: Signalverläufe bei einem erfindungsgemäßen Leitungsabschluß,
- Figur 5: ein Prinzipschaltbild eines bekannten Leitungsabschlusses und
- Figur 6: Signalverläufe für den Leitungsabschluß gemäß Figur 5.

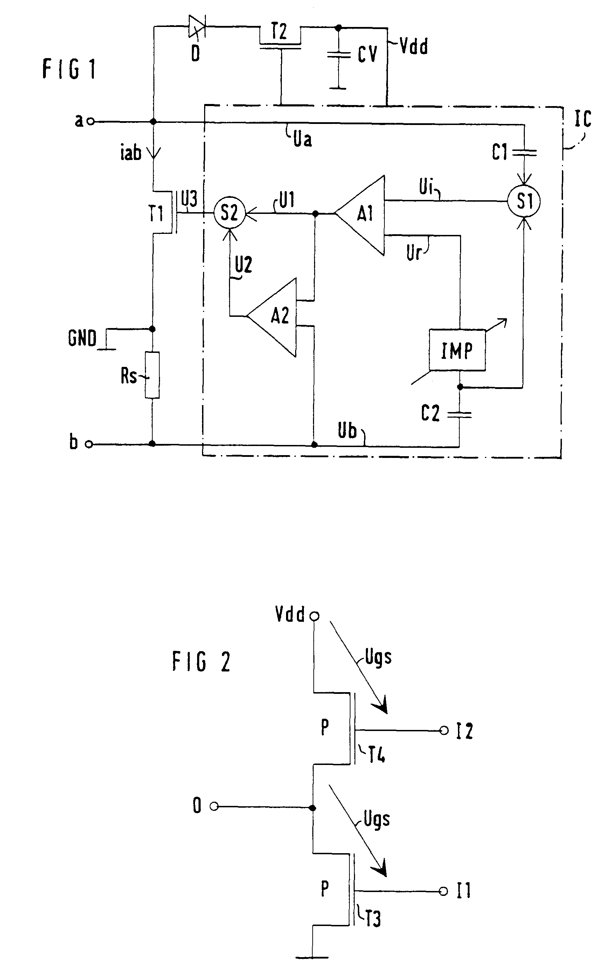

Figur 1 zeigt ein Prinzipschaltbild eines Ausführungsbeispiels eines erfindungsgemäßen Leitungsabschlusses einer Telefonleitung. Gleiche Elemente wie bei dem nach Figur 5 beschriebenen bekannten Leitungsabschluß sind mit gleichen Bezugszeichen versehen. Die Anordnung nach Figur 1 unterscheidet sich von der Anordnung nach Figur 5 dadurch, daß ein weiterer Verstärker A2 und ein Summierer S2 zusätzlich vorgesehen sind. An den Eingängeen des weiteren Verstärkers A2 liegen die Ausgangs-Stellgröße U1 des Verstärkers A1 einerseits und andererseits die Leiterspannung Ub der Leiterklemme b. Der Verstärker A2 erzeugt ausgangsseitig eine weitere Stellgröße U2. Die Ausgangs-Stellgröße U1 und die weitere Stellgröße U2 bilden die Eingänge des Summierers S2, der ausgangsseitig die Stellgröße U3 erzeugt, die den Transistor T1 steuert.

Die Ausgangs-Stellgröße U1 wird mit der Spannung Ub an der Leiterklemme b der Telefonleitung verglichen, die proportional zum Schleifen- bzw. Leitungsstrom iab ist. Der Summierer S2 addiert die verstärkte Ausgangsspannung U2 mit der Ausgangs-Stellgröße U1, um so die neue Stellgröße U3 für den Transistor T1 zu erzeugen. Der Verstärker A2 besitzt eine hohe Verstärkung, so daß der erfindungsgemäße Regelkreis insgesamt eine große Schleifenverstärkung aufweist. Die hohe Verstärkung von A2 verhindert ein Abweichen der Spannung Ub von der Ausgangs-Stellgröße U1 der Impedanzregelung. Die Ausregelung sprunghafter Änderungen des Schleifenstroms iab, die beim Sperrbetrieb der Diode D bzw. einer Unterbrechung des Versorgungsstroms für die Kapazität CV auftreten und nicht durch die Impedanzregelung verursacht werden, wird durch die Stellgröße U2 übernommen und entlastet dadurch die Ausgangs-Stellgröße U1 des Impedanzregelkreises. Damit ist die Impedanzregelung nur noch für die Nachbildung der Leitungsimpedanz gemäß der Übertragungsfunktion IMP bzw. der Referenzspannung Ur verantwortlich. Die Summation der beiden Stellgrößen U1 und U2 im Summierer S2 ergibt dann die tatsächlich benötigte Stellgröße U3 für den Transistor T1.

Mit Hilfe des erfindungsgemäßen Regelkreises als zusätzlicher Regelschleife mit Bezug auf die Impedanzregelung ist außerdem eine konstante Schleifenverstärkung des Impedanzregelkreises möglich, die unabhängig von der Transkonduktanz des Transistors T1 ist. Damit läßt sich ein verbessertes Stabilitätsverhalten bzw. eine bessere Kontrolle der Stabilität des Leitungsabschlusses erreichen.

Figur 2 zeigt ein Detailschaltbild zum Aufbau eines Summierers S2. Derartige Summierer sind wichtige Elemente von Regelkreisen. Linearität und exakte Verstärkung sind in Regelkreisen mit hoher Schleifenverstärkung keine unabdingbare Forderung an die Addierer. Dies gilt auch für den Summierer S2 in Figur 1. Das bedeutet, daß hoher Aufwand bei der Realisierung des Summierers, beispielsweise mit einem flächenintensiven Operationsverstärker, nicht zwingend erforderlich ist. Figur 2 zeigt als Grundelement eines Addierers einen Subtrahierer, der mit zwei p-Kanal-Transistoren aufgebaut ist und zwei Wechselsignale subtrahieren kann.

Die beiden p-Kanal-Transistoren T3 und T4 sind ausgangsseitig in Reihe geschaltet und werden von der Versorgungsspannung versorgt. Die zu subtrahierenden Signale liegen an den Steuereingängen I1 und I2 der Transistoren T3 und T4 an. Der Verbindungspunkt 0 der Ausgangskreise der Transistoren stellt den Ausgang des Subtrahierers dar. Die beiden Transistoren T3 und T4 haben gleiche Größe und werden von demselben Querstrom durchflossen. Beide Transistoren haben deshalb die gleiche Gate-Source-Spannung, die der Spannungsdifferenz zwischen Vdd und dem Eingang I2 entspricht. Bei wechselspannungsmäßiger Aussteuerung ergibt sich das ausgangsseitige Wechselsignal als Differenz des Wechselsignals am Eingang I1 und des Wechselsignals am Eingang I2. Voraussetzung für einen derartig aufgebauten Subtrahierer ist ein hochohmiger Eingang in die anschließende Stufe.

Um den gemäß Figur 2 beschriebenen Subtrahierer als Addierer zu betreiben, ist lediglich die Invertierung des am Eingang I2 anliegenden Signals erforderlich. Mit Hilfe von Spannungsteilern vor den Eingängen des Subtrahierers kann ein Dämpfungsfaktor der einzelnen Eingänge beliebig eingestellt werden.

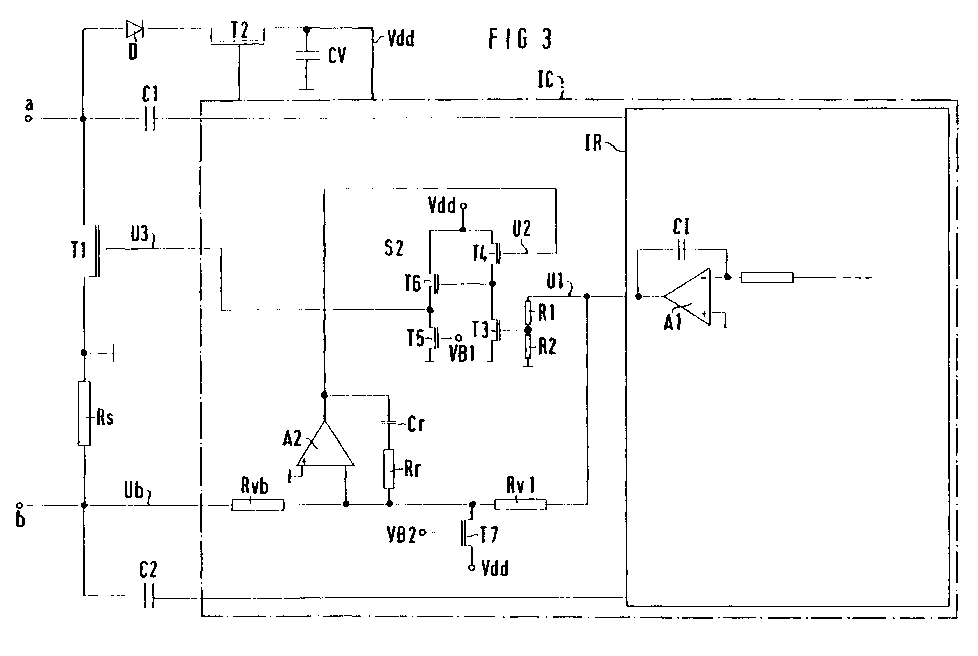

Figur 3 zeigt ein detaillierteres Prinzipschaltbild des beanspruchten Regelkreises. In der integrierten Schaltung IC ist ein als Block dargestellter Impedanzregelkreis IR enthalten. Dieser Impedanzregelkreis enthält einen mit Hilfe der Rückkopplungskapazität CI als Integrator beschalteten Operationsverstärker A1, der die Ausgangs-Stellgröße U1 erzeugt. Die weitere Stellgröße U2 wird mit Hilfe des Operationsverstärkers A2 erzeugt, der als Proportional-Integral-Regler beschaltet ist. Dazu ist der Operationsverstärker A2 im Rückkopplungskreis mit der Serienschaltung einer Rückkopplungskapazität CR und eines Rückkopplungswiderstandes Rr ausgestattet. Am invertierenden Eingang des Operationsverstärkers A2 werden die Ausgangs-Stellgrößen U1 und die Leiterspannung Ub über die Vorwiderstände Rvl und Rvb angelegt. Mit Hilfe eines Transistors T7 wird die Leiterspannung Ub, die auf Bezugspotential GND bezogen ist, auf das chipinterne Bezugspotential Vdd/2 eingestellt.

Die weitere Stellgröße U2 wird an den Eingang des Transistors T4 des Subtrahierers aus den Transistoren T3 und T4 angelegt. Über einen Spannungsteiler R1 und R2 liegt ein Teil der Ausgangs-Stellgröße U1 am Eingang des Transistors T3. Der Ausgang des Subtrahierers wird durch einen Source-folger aus den beiden n-Kanal-Transistoren T5 und T6 mit hoher Steilheit gm von der Kapazität des externen Transistors T1 entkoppelt. Dazu ist der Ausgang des Subtrahierers mit dem Eingang des Transistors T6 verbunden, während der Eingang des Transistors T5 auf einem Bezugspotential VBl liegt.

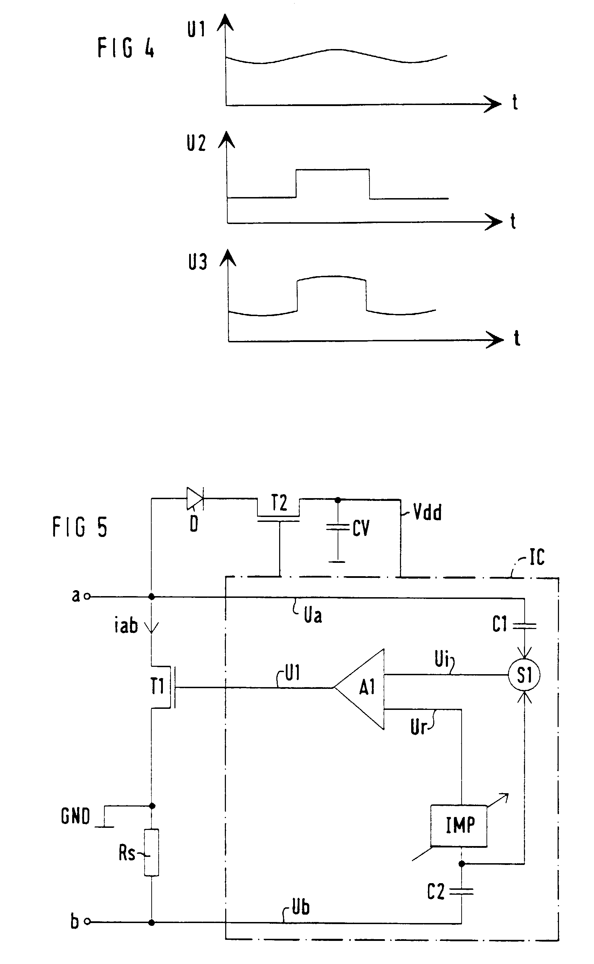

Figur 4 zeigt die Signalverläufe der Stellgrößen U1, U2 und U3 für eine Schaltung gemäß Figur 1 bzw. Figur 3. Die Stellgröße U1 hat erkennbar einen Verlauf wie in Figur 6a. Die Stellgröße U2 des erfindungsgemäßen Regelkreises zeigt einen Signalsprung bei lückendem Versorgungsstrom für die Speicherkapazität CV. Die resultierende Stellgröße U3 als Eingangsgröße für den Transistor T1 zeigt einen gegenüber Figur 6b erheblich verbesserten Signalverlauf. Auf diese Weise lassen sich Verzerrungen des Audiosignals bei lückendem Versorgungsstrom für den integrierten Schaltkreis IC vermeiden oder aber zumindest wesentlich verringern.

## Patentansprüche

1. Leitungsabschluß einer Telefonleitung mit einer Regelungsanordnung zur Erzeugung einer geregelten Versorgungsspannung für eine Abschlußschaltung, die einen Verstärker (A1) enthält, der aus der Wechselspannung (Ui) der Telefonleitung und einer Referenzspannung (Ur) eine Ausgangs-Stellgröße (U1) erzeugt, die einen zwischen den Leiterklemmen (a,b) der Telefonleitung angeordneten Stelltransistor (T1) steuert,
**gekennzeichnet** durch einen weiteren, der Regelungsanordnung unterlagerten Regelkreis, der eine Leiterspannung (Ub) der Ausgangs-Stellgröße (U1) des Verstärkers (A1) nachregelt, wobei der Regelkreis einen weiteren Verstärker (A2) enthält, der die Ausgangs-Stellgröße (U1) und die eine Leiterspannung (Ub) vergleicht und eine Stellgröße (U2) des Regelkreises erzeugt.

2. Leitungsabschluß nach Anspruch 1,
**dadurch gekennzeichnet,**
daß die Leiterspannung (Ub) proportional zum Strom (iab) durch die Telefonleitung ist.

3. Leitungsabschluß nach einem der Ansprüche 1,
**dadurch gekennzeichnet,**
daß die Ausgangs-Stellgröße (U1) des Verstärkers (A1) und die Stellgröße (U2) des Regelkreises die Eingangsgröße für den Stelltransistor (T1) bilden.

4. Leitungsabschluß nach Anspruch 3,
**dadurch gekennzeichnet,**
daß die Ausgangs-Stellgröße (U1) des Verstärkers (A1) und die Stellgröße (U2) des Regelkreises addiert werden.

5. Leitungsabschluß nach Anspruch 4,
**dadurch gekennzeichnet,**
daß die Addition der Ausgangs-Stellgröße (U1) und der Stellgröße (U2) des Regelkreises mit Hilfe einer Schaltung erfolgt, die zwei in Serie geschaltete p-Kanal-Transistoren (T3, T4) mit gleichen Gate-Source-Spannungen (Ugs) enthält.

6. Leitungsabschluß nach Anspruch 5,
**dadurch gekennzeichnet,**
daß dem Eingang eines der p-Kanal-Transistoren (T3) ein Spannungsteiler (R1, R2) vorgeschaltet ist.

7. Leitungsabschluß nach einem der Ansprüche 1 bis 6,
**gekennzeichnet** durch eine große Schleifenverstärkung des Regelkreises.

8. Leitungsabschluß nach einem der Ansprüche 1 bis 7,
**dadurch gekennzeichnet,**
daß die Verstärker (A1, A2) zur Erzeugung eines Verhaltens mit Integrieranteil rückgekoppelt sind.

## Claims

1. Line termination of a telephone line, having a regulating arrangement for generating a regulated supply voltage for a termination circuit, which contains an amplifier (A1) which generates an output manipulated variable (U1) from the AC voltage (Ui) of the telephone line and a reference voltage (Ur), which output manipulated variable controls a control transistor (T1) arranged between the conductor terminals (a, b) of the telephone line,
characterized by a further regulating circuit, which is
subordinate to the regulating arrangement and readjusts one conductor voltage (Ub) to the output manipulated variable (U1) of the amplifier (A1), the regulating circuit containing a further amplifier (A2), which compares the output manipulated variable (U1) and the one conductor voltage (Ub) and generates a manipulated variable (U2) of the regulating circuit.

2. Line termination according to Claim 1, characterized in that the conductor voltage (Ub) is proportional to the current (iab) through the telephone line.

3. Line termination according to one of Claims 1 and 2, characterized in that the output manipulated variable (U1) of the amplifier (A1) and the manipulated variable (U2) of the regulating circuit form the input variable for the control transistor (T1).

4. Line termination according to Claim 3, characterized in that the output manipulated variable (U1) of the amplifier (A1) and the manipulated variable (U2) of the regulating circuit are added.

5. Line termination according to Claim 4, characterized in that the addition of the output manipulated variable (U1) and the manipulated variable (U2) of the regulating circuit is carried out with the aid of a circuit containing two series-connected p-channel transistors (T3, T4) having identical gate-source voltages (Ugs).

6. Line termination according to Claim 5, characterized in that a voltage divider (R1, R2) is connected upstream of the input of one of the p-channel transistors (T3).

7. Line termination according to one of Claims 1 to 6, characterized by a large loop gain of the regulating circuit.

8. Line termination according to one of Claims 1 to 7, characterized in that the amplifiers (A1, A2) have feedback in order to produce action with an integrating component.

## Revendications

1. Terminaison de ligne d'une ligne de téléphone avec un dispositif de régulation pour la production d'une tension d'alimentation régulée pour un circuit de terminaison comprenant un amplificateur (A1) qui produit, à partir de la tension alternative (Ui) de la ligne de téléphone et d'une tension de référence (Ur), une variable de sortie (U1) qui commande un transistor de réglage (T1) situé entre les bornes (a, b) de la ligne de téléphone, caractérisée par un circuit de réglage supplémentaire subordonné au dispositif de régulation et qui rajuste la tension de ligne (Ub) à la variable de sortie (U1) de l'amplificateur (A1), le circuit de réglage comprenant un autre amplificateur (A2) qui compare la variable de sortie (U1) et cette tension de ligne (Ub) et produit une variable (U2) du circuit de réglage.

2. Terminaison de ligne selon la revendication 1, caractérisée en ce que la tension de ligne (Ub) est proportionnelle au courant (iab) circulant dans la ligne de téléphone.

3. Terminaison de ligne selon la revendication 1, caractérisée en ce que la variable de sortie (U1) ) de l'amplificateur (A1) et la variable (U2) du circuit de réglage forment la grandeur d'entrée pour le transistor de réglage (T1).

4. Terminaison de ligne selon la revendication 3, caractérisée en ce que la variable de sortie (U1) ) de l'amplificateur (A1) et la variable (U2) du circuit de réglage sont additionnées.

5. Terminaison de ligne selon la revendication 4, caractérisée en ce que l'addition de la variable de sortie (U1) ) et de la variable (U2) du circuit de réglage est effectuée à l'aide d'un circuit qui comprend deux transistors à canal P (T3, T4) montés en série et ayant des tensions grille-source identiques (Ugs).

6. Terminaison de ligne selon la revendication 5, caractérisée en ce qu'un diviseur de tension (R1, R2) est monté en amont de l'entrée de l'un des transistors à canal P (T3).

7. Terminaison de ligne selon l'une des revendications 1 à 6, caractérisée par une amplification en boucle importante du circuit de réglage.

8. Terminaison de ligne selon l'une des revendications 1 à 7, caractérisée en ce que les amplificateurs (A1, A2) font l'objet d'un montage à réaction pour générer un comportement avec partie intégratrice.
